(19) Europäisches Patentamt
European Patent Office
Office européen des brevets

(11) Veröffentlichungsnummer: **0 393 666**
**A2**

(12) # EUROPÄISCHE PATENTANMELDUNG

(21) Anmeldenummer: **90107434.4**

(22) Anmeldetag: **19.04.90**

(51) Int. Cl.[5]: **C08L 33/06, C08L 3/00, C08F 220/12, C09D 133/06, C09J 133/06, //(C08F220/12, 220:36)**

(30) Priorität: **21.04.89 DE 3913168**

(43) Veröffentlichungstag der Anmeldung:
**24.10.90 Patentblatt 90/43**

(84) Benannte Vertragsstaaten:
**DE ES FR GB IT**

(71) Anmelder: **BASF Aktiengesellschaft**
**Carl-Bosch-Strasse 38**
**D-6700 Ludwigshafen(DE)**

(72) Erfinder: **Filges, Ulrich, Dr.**
**Albert-Einstein-Allee 33**
**D-6703 Limburgerhof(DE)**
Erfinder: **Aydin, Oral, Dr.**
**Sophienstrasse 14**
**D-6800 Mannheim 1(DE)**
Erfinder: **Otterbach, Andreas, Dr.**
**Knietschstrasse 13**
**D-6710 Frankenthal(DE)**

(54) **Nichtwässrige Kunstharzzubereitungen.**

(57) Nichtwäßrige Kunstharzzubereitungen, im wesentlichen enthaltend

A) 20 bis 95 Gew.-% wenigstens eines Kunstharzes, das aus

a) 90 bis 99,95 Gew.-% wenigstens eines Acryl- und/oder Methacrylsäureesters eines 1 bis 12 C-Atome enthaltenden Alkanols,

b) 0,05 bis 10 Gew.-% wenigstens eines Monomeren der allgemeinen Formel I

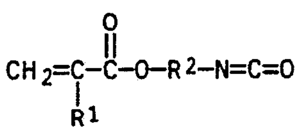 I,

in der die Variablen folgende Bedeutung haben:

$R^1$ Wasserstoff oder die Methylgruppe

$R^2$ Kohlenwasserstoffkette mit bis zu 12 C-Atomen, die ein- oder mehrfach mit Sauerstoff unterbrochen sein kann

und

c) 0 bis 10 Gew.-% eines oder mehrerer radikalisch copolymerisierbarer ethylenisch ungesättigter Monomeren aufgebaut ist,

und

B) 5 bis 80 Gew.-% wenigstens eines anorganischen Füllstoffs.

Diese nichtwäßrigen Kunstharzzubereitungen eignen sich als Klebe-, Dichtungs- und Beschichtungsmassen.

EP 0 393 666 A2

Xerox Copy Centre

## Nichtwäßrige Kunstharzzubereitungen

Die vorliegende Erfindung betrifft nichtwäßrige Kunstharzzubereitungen, im wesentlichen enthaltend

A) 20 bis 95 Gew.-% wenigstens eines Kunstharzes, das aus

a) 90 bis 99,95 Gew.-% wenigstens eines Acryl- und/oder Methacrylsäureesters eines 1 bis 12 C-Atome enthaltenden Alkanols,

b) 0,05 bis 10 Gew.-% wenigstens eines Monomeren der allgemeinen Formel I

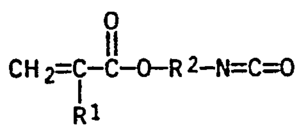
I,

in der die Variablen folgende Bedeutung haben:

$R^1$ Wasserstoff oder die Methylgruppe

$R^2$ Kohlenwasserstoffkette mit bis zu 12 C-Atomen, die ein- oder mehrfach mit Sauerstoff unterbrochen sein kann

und

c) 0 bis 10 Gew.-% eines oder mehrerer radikalisch copolymerisierbarer ethylenisch ungesättigter Monomeren aufgebaut ist,

und

B) 5 bis 80 Gew.-% wenigstens eines anorganischen Füllstoffs.

Außerdem betrifft die Erfindung die Verwendung dieser Zubereitungen als Klebe-, Dichtungs- und Beschichtungsmassen.

Aus der DE-C-29 15 864 sind nichtwäßrige Kunstharzzubereitungen bekannt, die als Kunstharze Reaktionsprodukte von acrylischen Copolymeren niedrigen Molekulargewichts mit organischen Diisocyanaten enthalten. Diese Kunst harzzubereitungen werden als feuchtigkeitshärtende elastische Einkomponenten-Dichtungsmittel empfohlen, die unter Feuchtigkeitsausschluß lagerfähig sind.

Nachteilig an diesen Dichtungsmitteln ist jedoch, daß sie im ausgehärteten Zustand eine erhöhte Oberflächenklebrigkeit aufweisen und daß die Herstellung der enthaltenen Kunstharze ein komplexes Herstellungsverfahren erfordert. Der vorliegenden Erfindung lag daher die Aufgabe zugrunde, auf einfache Art und Weise zugängliche, hauptsächlich aus Acryl- und/oder Methacrylsäureestern aufgebaute, Isocyanatgruppen-haltige Polymerisate als Kunstharze enthaltende nichtwäßrige Kunstharzzubereitungen zur Verfügung zu stellen, die unter Feuchtigkeitsausschluß lagerfähig und insbesondere als feuchtigkeitshärtende elastische Einkomponenten-Dichtungsmittel, die im ausgehärteten Zustand keine Oberflächenklebrigkeit aufweisen, geeignet sind. Demgemäß wurden die eingangs definierten Kunstharzzubereitungen gefunden.

Als Monomere a enthalten die Kunstharze A mit Vorteil Ester der Acryl-oder Methacrylsäure einpolymerisiert, die sich von 1 bis 8 C-Atomen enthaltenden Alkanolen wie Methanol, Ethanol, iso-Propanol, n- und iso-Butanol, n-Pentanol, n-Hexanol sowie 2-Ethylhexanol ableiten, wobei die Ester der Acrylsäure bevorzugt sind. Besonders bevorzugte Acrylate a sind Ethylacrylat, n-Butylacrylat, n-Hexylacrylat und 2-Ethylhexylacrylat.

Verbindungen der allgemeinen Formel I sind bekannt und u.a. in der DE-A-35 23 692 beschrieben. Ihr Anteil an A beträgt vorzugsweise 0,2 bis 8, besonders bevorzugt 1 bis 6 Gew.-%. Mit besonderem Vorteil in A einpolymerisierte Monomere B der allgemeinen Formel I sind das ω-Isocyanatoethylacrylat und das 5-Isocyanato-3-oxapentylmethacrylat.

Während der Einbau der Monomeren a und b in A obligatorisch ist, bilden die Monomeren c lediglich Hilfsmonomere, die man in der Regel dann mitverwenden wird, wenn eine bestimmte Härte der Polymerisate erwünscht ist. Mögliche Monomere c sind z.B. Acryl- und Methacrylnitril, Vinylether von $C_1$- bis $C_8$-Alkanolen wie Ethylvinylether, Vinylester von $C_2$- bis $C_{12}$-n-Alkansäuren wie Vinylacetat und Vinylpropionat, Vinylhalogenide wie Vinylchlorid, vinylaromatische Verbindungen wie Styrol, Vinyltoluole, Chlorstyrole oder tert.-Butylstyrole sowie niedere ungesättigte Kohlenwasserstoffe wie α-Olefine oder konjugierte Kohlenwasserstoffe wie Butadien, wobei Acryl- und Methacrylnitril sowie Styrol bevorzugt sind.

Mit Vorteil werden die Gew.-Teile der Monomeren a und c mit Hilfe der Beziehung von Fox so gewählt, daß ein nur aus diesen Monomeren aufgebautes Polymerisat eine Glastemperatur von -70 bis +20, bevorzugt -50 bis +20 und besonders bevorzugt von -30 bis -10 °C aufweisen würde. Nach Fox (T.G. Fox,

Bull. Am. Phys. Soc. [Ser. II], 1, 123 [1956]) gilt für die Glastemperatur von Mischpolymerisaten in guter Nährung:

$$\frac{1}{Tg} = \frac{X^1}{Tg^1} + \frac{X^2}{Tg^2} + \ldots\ldots\ldots \frac{X^n}{Tg^n}$$

wobei $X^1$, $X^2$, ....., $X^n$ die Massenbrüche der Monomeren 1, 2, ..., n und $Tg^1$, $Tg^2$, ....., $Tg^n$ die Glastemperaturen der jeweils nur aus einem der Monomeren 1, 2, ... oder n aufgebauten Polymeren in Grad Celsius bedeuten. Die Glastemperaturen dieser Homopolymerisate der Monomeren a und c sind bekannt und z.B. in J. Brandrup, E.H. Immergut, Polymer Handbook 1st Ed. J. Wiley, New York, 1966 und 2nd Ed. J. Wiley, New York, 1975 aufgeführt.

Die Herstellung der Kunstharze A erfolgt vorzugsweise durch radikalische Polymerisation, wobei die Polymerisation in Lösung bevorzugt wird.

Die Lösungspolymerisation kann als Chargenprozeß oder in Form eines Zulaufverfahrens durchgeführt werden. Bevorzugt ist das Zulaufverfahren, bei dem man einen Teil des Polymerisationsansatzes vorlegt, auf die Polymerisationstemperatur erhitzt und anschließend den Rest kontinuierlich zuführt.

Als Lösungsmittel werden in der Regel Ether wie Tetrahydrofuran oder Dioxan, Ester wie Ethyl- oder n-Butylacetat, Ketone wie Aceton und Cyclohexanon, N,N-Dialkylcarbonsäureamide wie N,N-Dimethylformamid, N,N-Dimethylacetamid oder N-Methyl-2-pyrrolidon, Aromaten wie Toluol und Xylol, aliphatische Kohlenwasserstoffe wie Isooctan, chlorierte Kohlenwasserstoffe wie tert.-Butylchlorid oder Weichmacher wie Di-n-butylphthalat verwendet.

Das gewichtsmittlere Molekulargewicht $\overline{M}_w$ der Kunstharze A beträgt im allgemeinen 3000 bis 150.000, bevorzugt 10.000 bis 100.000.

Dementsprechend weisen die Kunstharze A in Tetrahydrofuran (THF) üblicherweise einen K-Wert von 15 bis 90, bevorzugt von 25 bis 60 auf.

Der K-Wert ist eine relative Viskositätszahl, die in Analogie zur DIN 53 726 bei 25°C bestimmt wird. Er enthält die Fließgeschwindigkeit einer Mischung aus 0,01 g Kunstharz A pro ml THF, relativ zur Fließgeschwindigkeit von reinem THF und charakterisiert den mittleren Polymerisationsgrad des Kunstharzes A, der sich durch Steuerung der Polymerisa tionsbedingungen in bekannter Weise beeinflussen läßt. Als Radikalstarter kommen insbesondere organische Azoverbindungen oder organische Peroxide wie Azo-bis-(isobutyronitril), Dibenzoylperoxid oder tert.-Butylperbenzoat in Betracht. Zweckmäßigerweise werden diese in Mengen von 0,05 bis 5,0, vorzugsweise 0,3 bis 1 Gew.-%, bezogen auf die Summe der Monomeren, eingesetzt. Die Polymerisationstemperatur beträgt in der Regel 50 bis 150, vorzugsweise 80 bis 130°C. Als weitere Hilfsmittel können u.a. kettenübertragende Substanzen wie aliphatische, aromatische oder alicyclische Mercaptane, z.B. n-Butylmercaptan oder n-Laurylmercaptan oder Thioglycolsäurealkylester wie Thioglycolsäureethylester zugesetzt werden, wobei Mengen von 0 bis 3 Gew.-%, bezogen auf die Summe der Monomeren, geeignet sind.

Zweckmäßigerweise arbeitet man in "wasserfreiem" Polymerisationsmedium, d.h. bei einem Wassergehalt von weniger als 100 ppm. Mit Vorteil wird die Lösungspolymerisation der an sich wasserfreien Reaktionsteilnehmer in Gegenwart geringer Mengen an Trocknungsmitteln wie Tetraalkoxysilanen, z.B. Tetramethoxysilan oder Orthoameisensäuretrialkylestern, z.B. Triethylorthoformiat, gegebenenfalls unter Zusatz einer Lewis-Säure, durchgeführt. Von den so erhältlichen Lösungen der Kunstharze A kann das Lösungsmittel nach Bedarf, beispielsweise durch Destillation im Vakuum, teilweise oder vollständig abgetrennt werden.

Als Komponente B werden den erfindungsgemäßen Kunstharzzubereitungen mit Vorteil Aluminiumsilicate, Quarz, gefällte oder pyrogene Kieselsäure (die hydrophobiert sein kann), Leicht- und Schwerspat, Talcum, Dolomit, Calciumcarbonat, Ruß oder farbgebende Pigmente zugesetzt. Als Weißpigmente werden bevorzugt Titanweiß, Bleiweiß, Zinkweiß, Litopone und Antimonweiß, als Schwarzpigmente vorzugsweise Eisenoxidschwarz, Manganschwarz, Cobaltschwarz oder Antimonschwarz, als Buntpigmente z.B. Chromgelb, Mennige, Zinkgelb, Zinkgrün, Pinkrot, Cadmiumrot, Kobaltblau, Berliner Blau, Ultramarin, Manganviolett, Cadmiumgelb, Molybdatorange oder Strontiumgelb eingesetzt. Im allgemeinen werden die Füllstoffe in feiner Körnung zugegeben. Die durchschnittliche Korngröße, als arithmetisches Mittel der jeweils größten Durchmesser, beträgt vorzugsweise 0,01 bis 200, besonders bevorzugt 0,01 bis 10 µm.

Zusätzlich können die erfindungsgemäßen Zubereitungen bis zu 15, bevorzugte Zubereitungen 2 bis 15 Gew.-% als äußere Weichmacher C geeignete niedermolekulare organische Substanzen enthalten. Geeignete äußere Weichmacher sind beispielsweise Phthalsäureester wie Diethylphthalat, Di-n-butylphthalat, Di-isoheptylphthalat oder Di-(2-ethylhexyl)-phthalat, Adipinsäureester wie Di-2-ethylhexyladipat oder Di-isooctyladipat, Sebacinsäureester wie Di-(2-ethylhexyl)-sebacinat, Phosphorsäureester wie Tri-n-butylphosphat, Tri-isobutyl-phosphat oder Tri-(ß-chlorethyl)-phosphat sowie chlorierte Kohlenwasserstoffe.

Die erfindungsgemäßen Zubereitungen können lösungsmittelfrei angewendet werden. Zur Verbesserung der Verarbeitbarkeit, insbesondere zur Erniedrigung der Viskosität, enthalten sie jedoch bis zu 40, bevorzugt 2 bis 40 % ihres Gewichtes organische Lösungsmittel, wobei vorzugsweise die Lösungsmittel verwendet werden, die auch für die Lösungspolymerisation zur Herstellung von Kunstharzen A geeignet sind.

Zusätzlich können die erfindungsgemäßen Kunstharzzubereitungen in untergeordneten Mengen, bis zu 5 Gew.-%, weitere Hilfsmittel wie Mittel zur Erhöhung der Alterungsbeständigkeit, z.B. Fungizide, Farbstoffe, Verdickungsmittel oder Wirkstoffe, die die Aushärtung durch Einwirkung von Luftfeuchtigkeit beschleunigen (z.B. Tetra-n-butyl-titanat, Di-n-butylzinn-di-n-dodecanat, Di-n-butyl-zinn-di-acetat oder tert.Amine wie 1,4-Diazo-bicyclo(2.2.2)octan sowie Triethylamin), enthalten.

Die erfindungsgemäßen Zubereitungen können in Form von Einkomponentensystemen hergestellt werden, indem man alle Bestandteile miteinander vermischt und in einem abgedichteten Behälter gebrauchsfertig lagert. Dabei werden vorzugsweise die Bestandteile B und gegebenenfalls C sowie die gegebenenfalls mitzuverwendenden weiteren Hilfsstoffe in eine das organische Lösungsmittel D enthaltende Lösung des Kunstharzes A oder in eine Schmelze des Kunstharzes A eingerührt.

Die erfindungsgemäßen Massen können aber auch als Zweikomponentensystem verwendet werden, bei dem die Bestandteile B und gegebenenfalls C und D sowie weitere Hilfsmittel in einer Komponente vermischt werden, die vor Anwendung in eine Schmelze oder Lösung der Kunstharze A als zweite Komponente eingerührt wird. Im Falle eines Einkomponentensystems muß besonders sorgfältig auf den Ausschluß von Wasser geachtet werden, da sonst ein vorzeitiges Aushärten der Zubereitung erfolgt. Im Falle eines Zweikomponentensystems ist die Anwesenheit geringer Spuren Wasser in den Ausgangskomponenten weniger kritisch, was sowohl die Verarbeitung der Ausgangskomponenten als auch die Lagerung des Zweikomponentensystems erleichtert.

Die erfindungsgemäßen Kunstharzzubereitungen härten bei Einwirkung von Luftfeuchtigkeit innerhalb kurzer Zeit aus und weisen im gehärteten Zustand eine erhöhte Elastizität sowie Dehnfähigkeit, jedoch keine Oberflächenklebrigkeit auf. Sie zeigen darüber hinaus im gehärteten Zustand ein erhöhtes Haftvermögen auf Untergrundmaterialien wie Aluminium, Holz, Glas, Keramik, Beton, Mauerwerk sowie den meisten Kunststoffen. Ferner zeigen sie eine erhöhte Witterungsbeständigkeit und sind mit Haushaltsfarbe überstreichbar.

Bevorzugt eignen sie sich als Klebe-, Dichtungs- und Beschichtungsmassen, wobei die Verwendung als feuchtigkeitshärtende Dichtungsmassen besonders bevorzugt ist. Aufgrund ihrer erhöhten Elastizität im gehärteten Zustand werden sie insbesondere eingesetzt, um Risse im Untergrund zu überbrücken oder Dehnungsfugen auszufüllen. Im Außenbereich werden vorzugsweise erfindungsgemäße Kunstharzzubereitungen eines Kunstharzes A mit einer Glastemperatur von -10 bis -30 °C eingesetzt.

## Beispiele

### Beispiel 1

Herstellung verschiedener Lösungen A1 bis A12 von Kunstharzen A

Allgemeine Arbeitsvorschrift

Eine Lösung von 2 g Triethylorthoformiat in 300 g Toluol wurde auf die Polymerisationstemperatur von 100 °C erhitzt und unter Aufrechterhaltung der Polymerisationstemperatur innerhalb von 4 h mit 600 g einer Mischung aus Monomeren a bis c, die gegebenenfalls eine geringe Menge einer kettenübertragenden Substanz enthielt, und synchron dazu innerhalb von 5 h über einen separaten Zulauf mit einer Lösung einer geringen Menge von Azo-bis(isobutyronitril) in 100 g Toluol versetzt. Anschließend wurde noch 2 h bei 110 °C nachpolymerisiert. Der Feststoffgehalt der erhaltenen Kunstharzlösungen, der K-Wert der zugehörigen Kunstharze in THF, die Zusammensetzung der Monomerenmischung, die eingesetzte Menge an Radikalstarter, und gegebenenfalls an kettenübertragender Substanz, zeigt Tabelle 1. Die Angaben betreffen

mit Ausnahme des dimensionslosen K-Wertes Gew.-%, die sich mit Ausnahme des Feststoffgehaltes (Bezug auf die Kunstharzlösung) auf die Mischung der Monomeren beziehen.

Tabelle 1

| | A1 | A2 | A3 | A4 | A5 | A6 | A7 | A8 | A9 | A10 | A11 | A12 |
|---|---|---|---|---|---|---|---|---|---|---|---|---|
| Ethylacrylat | 81,7 | | 90 | 98 | 92 | 97 | 65 | 38 | | 80 | 70 | 80 |
| n-Butylacrylat | | 83 | | | | | 33 | 60,0 | 60 | | 10 | |
| Methylmethacrylat | | | | | | | | | | 18,2 | | |
| 5-Isocyanato-3-oxapentylmethacrylat | 1,6 | 2 | 2 | 2 | 1 | 3 | | | 2 | 1,8 | 2,5 | 2,5 |
| ω-Isocyanatoethylacrylat | | | | | | | 2 | 2 | | | | |
| Acrylnitril | 16,7 | 15 | 8 | | 7 | | | | 38 | | 10 | 17,5 |
| Styrol | | | | | | | | | | | 7,5 | |
| Azo-bis-(isobutyronitril) | 0,3 | 0,3 | 0,7 | 0,7 | 0,3 | 0,2 | 0,5 | 0,4 | 0,5 | 0,6 | 0,3 | 0,4 |
| Thioglycolsäureethylester | | | | | | | | 0,3 | 0,4 | 0,5 | | |
| K-Wert | 39,5 | 42 | 36,6 | 26,1 | 43,4 | 37,3 | 35,1 | 24,1 | 32 | 25,1 | 33,4 | 42,4 |
| Feststoffgehalt | 58,8 | 58,2 | 58,9 | 59,1 | 58 | 58,5 | 59,1 | 59,6 | 57,9 | 58,8 | 57,2 | 58 |

Beispiel 2

Verschiedene Kunstharzzubereitungen

Zur Herstellung verschiedener erfindungsgemäßer Kunstharzzubereitungen wurde von den Lösungen A7 bis A12 das Lösungsmittel destillativ abgetrennt und in jeweils 300 g der erhaltenen reinen Kunstharze verschiedene Zusatzstoffe eingerührt. Von den erhaltenen Massen wurde eine Probe in 2 mm Schichtdicke auf eine Glasplatte aufgetragen und 3 Wochen bei Raumtemperatur und einer relativen Luftfeuchtigkeit von 60 % ausgehärtet.

Tabelle 2 zeigt die Reißfestigkeit ($N/mm^2$) und die Reißdehnung (%), beide bestimmt nach DIN 53 504 bei einer Vorschubgeschwindigkeit von 100 mm/min und unter Verwendung des Probekörpers S3A, der erhaltenen elastischen Filme, sowie deren Oberflächenklebrigkeit. Zusätzlich gibt Tabelle 2 die Mengen der eingerührten Zusatzstoffe wieder. Außerdem zeigt Tabelle 2 als Vergleichsbeispiel eine Kunstharzzubereitung, zu deren Herstellung 300 g eines Kunstharzes V verwendet wurden, das gemäß Beispiel 1 der DE-C-29 15 864 durch Umsetzung von 300 g n-Butylacrylat, 10,2 g 2-Hydroxyethylacrylat, 6,6 g Mercaptoethanol und 30 g eines Gemisches aus 2,4- und 2,6-Diisocyanatotoluol hergestellt wurde.

Tabelle 2

| | A7 | A8 | A9 | A10 | A11 | A12 | V |
|---|---|---|---|---|---|---|---|
| Zusatzstoffe [g] | | | | | | | |
| Hydrophobierte pyrogene Kieselsäure | 60 | 50 | 30 | | 20 | | 60 |
| Calciumcarbonat | | | | 200 | 100 | | |
| Titanweiß | | | 20 | | | 30 | |
| Diethylphthalat | 30 | | | | | | 10 |
| Di-n-butyl-zinn-di-n-dodecanat | 2,5 | 3 | 3 | 3 | | 3 | 3 |
| 1,4-Diazo-bicyclo[2.2.2]octan | | | | | 2 | | |
| Reißfestigkeit | 0,25 | 0,2 | 0,3 | 0,25 | 0,2 | 0,7 | - |
| Reißdehnung | 312 | 290 | 310 | 277 | 338 | 410 | - |
| Oberflächenklebrigkeit | nein | nein | nein | nein | nein | nein | ja |

Beispiel 3

Witterungsbeständigkeit der erfindungsgemäßen ausgehärteten Kunstharzzubereitungen aus Beispiel 2

Die Witterungsbeständigkeit wurde mit Hilfe des Kurzzeitbewitterungsgerätes Xenotest 1200 der Fa. Hereaus GmbH, Hanau (BRD) geprüft. Dabei wurde ein Zyklus
3 min Beregnung
17 min Trockenphase
angewendet. Die im Inneren des Gerätes gemessene Schwarztafeltemperatur betrug 48° C.

Ergebnis: Nach einer Prüfzeit von 2000 Stunden waren keine Veränderungen ersichtlich.

## Ansprüche

1. Nichtwäßrige Kunstharzzubereitungen, im wesentlichen enthaltend

A) 20 bis 95 Gew.-% wenigstens eines Kunstharzes, das aus

a) 90 bis 99,95 Gew.-% wenigstens eines Acryl- und/oder Methacrylsäureesters eines 1 bis 12 C-Atome enthaltenden Alkanols,

b) 0,05 bis 10 Gew.-% wenigstens eines Monomeren der allgemeinen Formel I

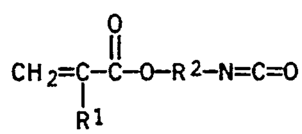

I,

in der die Variablen folgende Bedeutung haben:

$R^1$ Wasserstoff oder die Methylgruppe

$R^2$ Kohlenwasserstoffkette mit bis zu 12 C-Atomen, die ein-oder mehrfach mit Sauerstoff unterbrochen sein kann

und

c) 0 bis 10 Gew.-% eines oder mehrerer radikalisch copolymerisierbarer ethylenisch ungesättigter Monomeren aufgebaut ist,

und

B) 5 bis 80 Gew.-% wenigstens eines anorganischen Füllstoffs.

2. Verwendung der Kunstharzzubereitungen gemäß Anspruch 1 als Klebe-, Dichtungs- und Beschichtungsmassen.